# EUROPÄISCHE PATENTSCHRIFT

(11) **EP 3 249 079 B1**
(45) Veröffentlichungstag und Bekanntmachung des Hinweises auf die Patenterteilung: **26.06.2019**
(21) Anmeldenummer: 17171635.0
(22) Anmeldetag: 18.05.2017
(51) Int. Cl.: C25B 11/02, C25B 11/04, C25B 9/04, C02F 1/463

(54) **ELEKTROLYTISCHER REAKTOR**
ELECTROLYTIC REACTOR
RÉACTEUR ÉLECTROLYTIQUE

(30) Priorität: 27.05.2016 DE 102016109822
(43) Veröffentlichungstag der Anmeldung: 29.11.2017
(73) Patentinhaber: Fraunhofer-Gesellschaft zur Förderung der angewandten Forschung e.V., 80686 München (DE)
(72) Erfinder: EGNER, Siegfried, 74740 Adelsheim (DE); MARIAKAKIS, Iosif, 70197 Stuttgart (DE); CLAUSSNITZER, Uwe, 70569 Stuttgart (DE)
(74) Vertreter: DREISS Patentanwälte PartG mbB

(56) Entgegenhaltungen:
- DE-A1-102005 034 138
- US-A- 1 879 842
- US-A- 4 686 018
- US-A1- 2015 225 262

## Beschreibung

In der Verfahrenstechnik werden häufig elektrolytische Reaktoren eingesetzt, die eine Kathode und eine Anode aufweisen. Beim Betrieb des Reaktors wird eine elektrische Spannung zwischen Anode und Kathode angelegt, so dass sich die Anode verzehrt (Opferanode). So ist beispielsweise in der DE 10 2010 050 691 B3 und der DE 10 2010 050 692 B3 ein Verfahren und ein Reaktor zur Rückgewinnung von Phosphatsalzen aus einer Flüssigkeit beschrieben, wobei die Opferelektroden aus einem magnesiumhaltigen Material bestehen.

Insbesondere ist es aus einer Vielzahl von Dokumenten im Stand der Technik bereits bekannt, bei Opferanoden die Kathode beweglich zu gestalten, so dass der Abstand zwischen Kathode und Anode konstant gehalten werden kann.

Aufgabe der vorliegenden Erfindung ist es nun, einen elektrolytischen Reaktor bereitzustellen, der zwei Elektroden mit unterschiedlicher Polarität umfasst, wobei wenigstens eine der beiden Elektroden eine Opferelektrode ist und aus einem magnesiumhaltigen Werkstoff besteht und wobei die Elektroden möglichst kostengünstig bereitgestellt werden können.

Diese Aufgabe wird erfindungsgemäß durch einen elektrolytischen Reaktor gelöst, insbesondere zum Abtrennen von Phosphat aus phosphathaltigen Flüssigkeiten und Rückgewinnung von Phosphatsalzen, umfassend ein Gehäuse, einen Zulauf und einen Ablauf für die Flüssigkeit und zwei Elektroden unterschiedlicher Polarität, die zwischen sich einen Reaktionsraum einschließen, wobei wenigstens eine der beiden Elektroden eine Opferelektrode ist und aus einem magnesiumhaltigen Werkstoff besteht, wobei die Opferelektrode aus trapezoiden Barren aufgebaut ist, die eine erste und eine zweite Oberfläche aufweisen, wobei die erste Oberfläche kleiner als die zweite Oberfläche ist und vier Seitenflächen vorgesehen sind, die die erste mit der zweiten Oberfläche verbinden.

Dabei besteht die Opferelektrode vorzugsweise aus Rohmagnesium. Magnesium wird bei der Herstellung in Form von trapezoiden Barren als Halbzeuge gegossen. Durch die Verwendung der Barren ohne weiteren Bearbeitungsschritt können die Kosten für das Magnesium, das in einem entsprechenden Reaktor eingesetzt werden soll, vergleichsweise gering gehalten werden. Die Barren werden alternativ als Masseln bezeichnet. Dabei erfolgt die elektrolytische Rückgewinnung von Phosphor als auskristallisiertes Magnesium-Ammonium-Phosphat (MAP) (Struvite) bei Mangel an Magnesium im Ausgangssubstrat nach folgender Formel: Mg²⁺ + NH₄⁺ + PO₄³⁻ + 6H₂O→ MgNH₄ PO₄ - 6 H₂0 durch Freisetzung von Magnesiumionen an der Oberfläche einer Opferanode aus Magnesium. Das auskristallisierte Magnesiumammoniumphosphat kann dann aus der Flüssigkeit entfernt werden.

Die Barren sind dabei so gestaltet, dass von den Kantenlängen der ersten Oberfläche wenigstens zwei parallel, vorzugsweise aber alle vier Kantenlängen kürzer als bei der zweiten Oberfläche sind. Letztere werden nach folgend als allseits trapezoiden Barren bezeichnet.

Die Barren sind zur Bildung einer durchgehenden Oberfläche abwechselnd mit der ersten und der zweiten Oberfläche zum Reaktionsraum hin angeordnet und ergänzen einander in der Form. Dabei werden die Barren so angeordnet, dass sie mit den vorzugsweise langen Seitenflächen bei den rechteckigen Grundformen gegeneinander so anliegen, dass die eine schräg verlaufende Seitenfläche ausgehend von der größeren zur kleineren Oberfläche durch die Seitenfläche, die von der kleineren zur größeren Oberfläche eines zweiten Barrens läuft, so ergänzt wird, dass sich bei einer Draufsicht auf die Elektrode eine ebene Oberfläche ergibt.

Dabei soll unter einer ebenen oder im Wesentlichen ebenen Oberfläche verstanden werden, dass eine konstant geschlossene bzw. homogene Oberfläche in einer Draufsicht gebildet wird und lediglich kleiner 5 %, insbesondere kleiner 2 % der gesamten Elektrodenfläche nicht an der in einer Ebene liegenden Fläche partizipieren. Aufgrund von schräg verlaufenden Seitenflächen zwischen der ersten und der zweiten Oberfläche ist die ebene Fläche der Elektrode etwas geringer als die tatsächliche durch die Elektroden ausgefüllte Fläche. Dieser im Randbereich auftretende Effekt, der bei zweireihig gelegten Barren auch zwischen den Reihen auftreten kann, beeinträchtig die Elektrode nicht und bleibt für die Definition der ebenen Fläche unberücksichtigt, wenn der Anteil kleiner 5% und vorzugsweise kleiner 2% beträgt.Die ebene Fläche soll dabei über den gesamten Verzehr der Elektrode bestehen bleiben

Dabei kann besonders bevorzugt vorgesehen sein, dass die Barren eine Längsrichtung aufweisen und bezüglich ihrer Längsrichtung quer zur Strömungsrichtung des Reaktors angeordnet sind. D. h., die Barren weisen bezüglich ihrer ersten und zweiten Oberfläche eine längere Seitenkante und eine kürzere Seitenkante auf, wobei sich die Richtung der längeren Seitenkante quer zur Strömungsrichtung des Reaktors befindet.

Alternativ sind auch Gestaltungen denkbar, bei denen die Barren bezüglich ihrer Längsrichtung in Strömungsrichtung des Reaktors angeordnet sind. Grundsätzlich kann es dabei vorgesehen sein, dass jeweils die Barren mit ihren in Längsrichtung verlaufenden Seitenflächen gegeneinander anliegen. Grundsätzlich ist es jedoch auch denkbar, dass alternativ oder zusätzlich weitere Barren an der kürzeren Seitenfläche angeschlossen sind.

Besonders bevorzugt ist es dabei, wenn beide Elektroden gleichermaßen als Opferelektrode und beide aus einem magnesiumhaltigen Werkstoff und weiterhin vorzugsweise beide Elektroden, aus trapezoidförmigen magnesiumhaltigen Barren bestehen. Dabei können die Barren vorzugsweise aus Rohmagnesium gebildet sein. Auf diese Weise kann erreicht werden, dass durch Umschalten der Polarität sowohl die obere als auch die untere Elektrode gleichermaßen verzehrt werden, da sie abwechselnd als Anode und als Kathode dienen. Darüber hinaus kann durch das Umschalten der Polarität erreicht werden, dass es nicht zu Ablagerungen auf der jeweils als Kathode dienenden Elektrode kommt, die ansonsten durch Spüleinrichtungen immer wieder entfernt werden müssten. Bei Umschaltung der Polarität zwischen den Elektroden können vielmehr nur geringfügige Ablagerungen entstehen, die durch die nachfolgenden Verwendung als Anode wieder abgelöst werden. Auf diese Weise ist eine besonders gute und gleichmäßige Prozessführung im kontinuierlichen Prozess möglich.

Darüber hinaus ist es besonders vorteilhaft, wenn eine Elektrode relativ zur anderen Elektrode bewegt werden kann. Auf diese Weise kann unabhängig vom Verzehr der Elektroden der Abstand zwischen den beiden Elektroden immer konstant gehalten werden. Infolgedessen ist das elektrische Feld zwischen den Elektroden stets gleich und es werden optimale Umsetzungsraten in dem Reaktor bei gleichzeitig geringem Energieverbrauch erzielt.

Dabei ist es generell vorteilhaft, wenn eine der Elektroden in einem Gehäuse mit einem Gehäuseunterteil und eine weitere Elektrode mit einem Gehäuseoberteil verbunden sind. Besonders vorteilhaft ist es dabei, und besonders einfach in der Umsetzung, wenn die Elektrode, die im Gehäuseoberteil vorgesehen ist, relativ zur anderen Elektrode bewegt wird. Sofern diese Elektrode nicht als Opferelektrode ausgebildet ist, kann sie beispielsweise aus Edelstahl oder einem anderen korrosionsfesten elektrisch leitenden Material hergestellt sein. Dabei ist es für die Prozessführung von besonderer Bedeutung, dass ein konstanter Abstand zwischen den Oberflächen der Elektroden unabhängig vom Verzehr der Elektroden ist. Diese Oberflächen begrenzen einen Kanal, durch den die zu behandelnde Flüssigkeit fließt. Wenn also die Geometrie des Kanals und das zwischen den Elektroden (Anode und Kathode) vorhandene elektrische Feld konstant sind, dann werden definierte und sehr gute Umsetzungsraten bei minimalem Energieverbrauch erreicht.

Der gewünschte konstante Abstand kann in vorteilhafter Ausgestaltung der Erfindung dadurch erreicht werden, dass zwischen den Kanal begrenzenden Oberflächen der Elektroden mindestens ein elektrisch nicht leitender Abstandshalter, der beispielsweise aus Kunststoff oder einem anderen Material gebildet sein kann. Um ein Verkanten der Elektroden zu verhindern, ist es in der Regel vorteilhaft, mindestens zwei vorzugsweise beanstandete Abstandshalter vorzusehen. Die Abstandshalter sind so bemessen, dass der Abstand zwischen den Elektroden unabhängig vom Verzehr der Elektroden eingehalten wird. Dabei gilt der Kanal zwischen den Elektroden als Reaktionsraum.

Der Abstand kann mit Hilfe der Schwerkraft, einer oder mehrerer Federn oder einem oder mehreren Aktuatoren konstant gehalten werden. Wenn die Schwerkraft eingesetzt wird, um z. B. die obere Elektrode der unteren Elektrode nachzuführen in einer im Betriebszustand vorgesehenen Anordnung des Reaktors, dann wird in der Regel die in vertikaler Richtung oberhalb der anderen Elektrode vorgesehene Elektrode der unteren Elektrode nachgeführt. Ist nun der beschriebene Abstandhalter zwischen den Elektroden vorgesehen, dann wird auf sehr einfache und zuverlässige Weise der Abstand zwischen den den Reaktionsraum begrenzenden Oberflächen der Elektroden unabhängig vom Verzehr der Elektroden immer konstant gehalten.

Anstelle oder unterstützend zur Schwerkraft kann auch vorgesehen sein, die Elektroden federkraftunterstützt oder mit Hilfe von Aktuatoren elektrisch, pneumatisch oder hydraulisch zu bewegen, um den Materialabtrag der mindestens einen Opferelektrode auszugleichen und einen gleichbleibenden Abstand zwischen den den Reaktionsraum begrenzenden Oberfläche der Elektroden einzuhalten.

Wenn Aktuatoren zur Nachführung der einen Elektrode zur anderen vorgesehen sind, kann eine Abstandsregelung oder -steuerung zwischen den Elektroden eingerichtet werden, mit Sensoren, die als Teil eines Regelkreises den Verzehr bzw. die verbliebene Dicke der Elektroden erfassen. Dazu können alle am Markt befindlichen geeigneten Typen von Sensoren eingesetzt werden.

Grundsätzlich, wenn jedoch nicht bevorzugt, ist es jedoch auch erfindungsgemäß möglich, beide Elektroden zu bewegen, um den Abstand zwischen den Elektroden konstant zu halten.

Am einfachsten lässt sich der Reaktionsraum bzw. Kanal zwischen den begrenzenden Oberflächen der Elektroden konstant halten, wenn die den Reaktionsraum begrenzenden Oberflächen von beiden Elektroden eben sind.

Weiterhin ist es besonders bevorzugt, wenn die den Kanal begrenzenden Oberflächen der Elektroden rechteckig sind, was bedeutet, dass im Wesentlichen für die beiden Elektroden und trotz der bestehenden Dicke eine im Wesentlichen kubische Form vorgesehen ist, wobei hier das vorstehend Gesagte gilt, dass von der kubischen Form lediglich im Randbereich der Elektroden abgewichen werden soll, wobei eine Abweichung von kleiner 5%, insbesondere kleiner 2% bezogen auf die jeweilige Gesamtflächefläche der Barren, als kubische Form angesehen wird.

Dabei können, um den Reaktorablauf, den Prozess und den Verzehr der mindestens einen Opferelektrode erfassen zu können, bei dem erfindungsgemäßen Reaktor Mittel zur Erfassung der Position der Elektroden vorgesehen sein. Diese Mittel zur Erfassung der Position wenigstens einer der Elektroden können z. B. ein Positionssensor in beliebiger Bauart sein. Dieser Positionssensor ist vorteilhafterweise an der bewegbar in dem Gehäuse des Reaktors angeordneten Elektrode befestigt, sofern eine solche vorgesehen ist. Dadurch kann der Grad des Verzehrs der Opferelektrode oder der Opferelektroden auf einfache Weise und sehr zuverlässig überwacht werden.

Schließlich sind auch Mittel zur Erfassung des elektrischen Stroms, der zwischen den Elektroden fließt, und/oder der elektrischen Spannung, die zwischen den Elektroden anliegt, vorsehbar. Dadurch lässt sich der Prozess, der in dem Reaktor abläuft, einfach und zuverlässig überwachen. Eventuelle Störungen des Prozesses führen zu Änderungen des elektrischen Stroms und/oder der elektrischen Spannung und können somit einfach detektiert werden.

Besonders vorteilhaft ist es dabei, wenn der Reaktionsraum einen rechteckigen Querschnitt in Strömungsrichtung besitzt und über den gesamten Reaktionsraum einen konstanten Strömungsquerschnitt aufweist. Auf diese Weise kann ein besonders gleichmäßiger und guter Reaktionsablauf bereitgestellt werden und es kann somit die Umsetzung optimal ablaufen.

Die mindestens eine Elektrode, nämlich die Opferelektrode, besteht aus einem magnesiumhaltigen Werkstoff. Dabei kann besonders bevorzugt mehr oder weniger reines Magnesium eingesetzt werden. Besonders bevorzugt sind beide Elektroden als Opferelektroden aus magnesiumhaltigem Werkstoff, insbesondere reinem Magnesium, ausgebildet.

Um eine besonders einfache Kontaktierbarkeit der Elektroden, insbesondere sofern eine bewegbare Elektrode vorgesehen ist, bereitzustellen, kann vorgesehen sein, dass die Elektrode über ein flexibles Kontaktband oder eine flexible Kontaktkette kontaktiert werden, die mit jedem der Barren in Kontakt ist. Auf diese Weise kann sichergestellt werden, dass jede der Elektroden sicher kontaktiert werden kann. Dabei kann es insbesondere bei barrenartigen Elementen der Elektrode zu Problemen kommen, da aufgrund des Gießprozesses der Barren es zu gewissen Höhenunterschieden der Barren kommen kann.

Barren, insbesondere Magnesiumbarren, werden in der Regel nicht in Großprozessen automatisiert abgegossen, sondern per Hand oder in Kleinmengen, so dass mit Füllschwankungen gerechnet werden muss, die dazu führen können, dass bei einer Elektrode nicht sämtliche Barren gleichermaßen mit einer Kontaktplatte in Kontakt kommen. Außerdem entsteht durch das Abkühlen ein gewisser Schwund, so dass Oberflächen von Barren ggf. nicht vollständig eben sind, sondern z.B. eine Einziehung aufweisen.

Aufgrund einer entstehenden Oxidschicht auf den Barren kann es dazu kommen, dass sich die Potentiale einer Elektrode zwischen den Barren nicht ausgleichen. Es ist daher vorteilhaft, dass die Kontaktierung über alle Barren gleichermaßen erfolgt. Mittels einer Kontaktkette oder eines flexiblen Kontaktbandes kann erreicht werden, dass das Kontaktband oder die Kette auf sämtlichen Barren zu liegen kommt und somit sämtliche Barren elektrisch kontaktiert sind.

Weitere Vorteile und Merkmale der Erfindung ergeben sich aus der nachfolgenden Zeichnung.

Dabei zeigen:
- Figur 1: einen Längsschnitt durch einen Magnesiumbarren in Darstellung a) und in Darstellung b) einen Querschnitt hierdurch,
- Figur 2: eine erste Elektrodengestaltung,
- Figur 3: eine alternative Elektrodengestaltung und
- Figur 4: eine Anordnung aus oberer und unterer Elektrode,
- Figur 5: Elektrode in Draufsicht und
- Figur 6: einen Schnitt durch die Barren der oberen Elektrode mit vorgesehener Kontaktierung,
- Figur 7: zwei Darstellungen von erfindungsgemäßen Reaktoren.

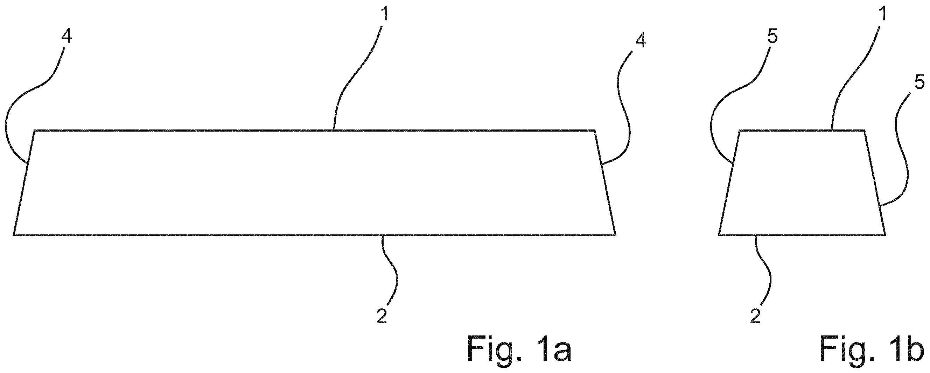

Figur 1 zeigt einen Längsschnitt durch einen handelsüblichen Magnesiumbarren mit einer kleineren Oberseite 1 sowie einer größeren Oberseite 2, wobei die zwischen den beiden Oberflächen 1 und 2 verlaufenden Seitenflächen 4 sowie 5 in den Figuren a) und b) gezeigt sind. Der Barren ist allseitig trapezoid.

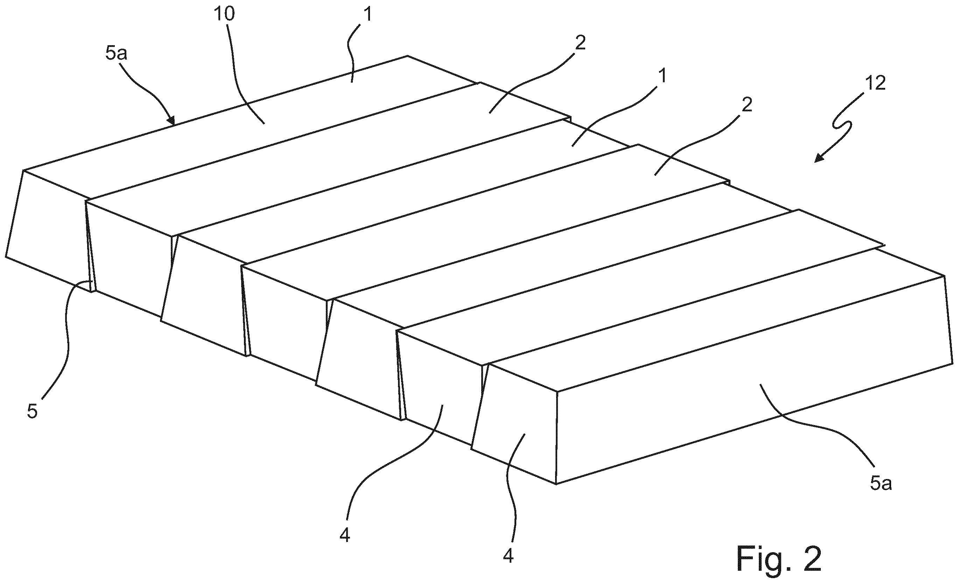

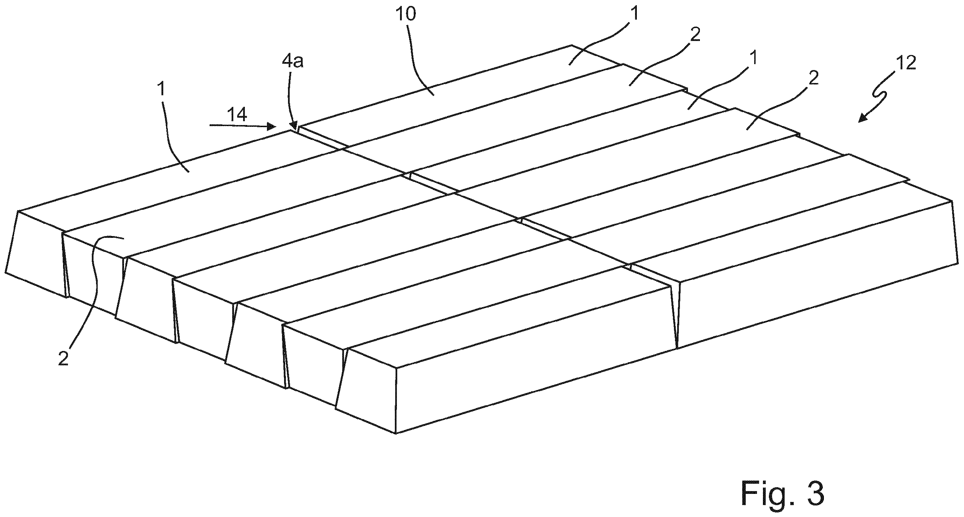

Figur 2 lässt sich nun ein wechselseitiges Legen der Barren entnehmen, so dass abwechselnd in der Einbausituation nach vertikal oben die Oberfläche 1 bzw. die Oberfläche gerichtet ist. Durch das wechselweise Legen der Barren deren Seitenflächen 5 die gleiche Abschrägung aufweisen, ergibt sich eine ebene Oberfläche 10, die in einem Reaktor als Begrenzung eines Reaktionsraumes und Oberfläche einer Elektrode dient. Die Abschrägungen der Seitenflächen 4 sowie die Abschrägung der äußersten Seitenflächen 5 (hier mit 5a bezeichnet) führen dazu, dass die ebene Fläche in den Randbereichen nicht ganz durchgehalten werden kann. Der Anteil dieser Randbereich beträgt jedoch weniger als 5% der gesamten Fläche und ist daher nicht zu berücksichtigen, so das die Elektrodenfläche insgesamt als ebene Fläche 10 bezeichnet werden kann. Darüber hinaus ist es auch möglich, weitere Reihen an Barren aneinander anzuschließen, wie Figur 3 zeigt, so dass sich eine Elektrode 12 mit ebener Oberfläche 10 ergibt. In diesem Fall ergeben sich je nach Legart bei allseitig trapezoiden Barren auch im Bereich zwischen den Reihen Bereiche, die von der ebenen Fläche abweichen. Diese Stellen sind beispielhaft mit 4a bezeichnet. Die Gesamtheit all dieser Bereiche macht jedoch erfindungsgemäß kleiner 5% an der Gesamtfläche 10 der Elektrode 12 aus.

Die Fließrichtung eines Mediums ist mit dem Bezugszeichen 14 gekennzeichnet.

Derartige Magnesiumelektroden werden insbesondere zur Abtrennung von Phosphat aus phosphathaltigen Abwässern eingesetzt, wo sie als Opferelektroden im Reaktor dienen.

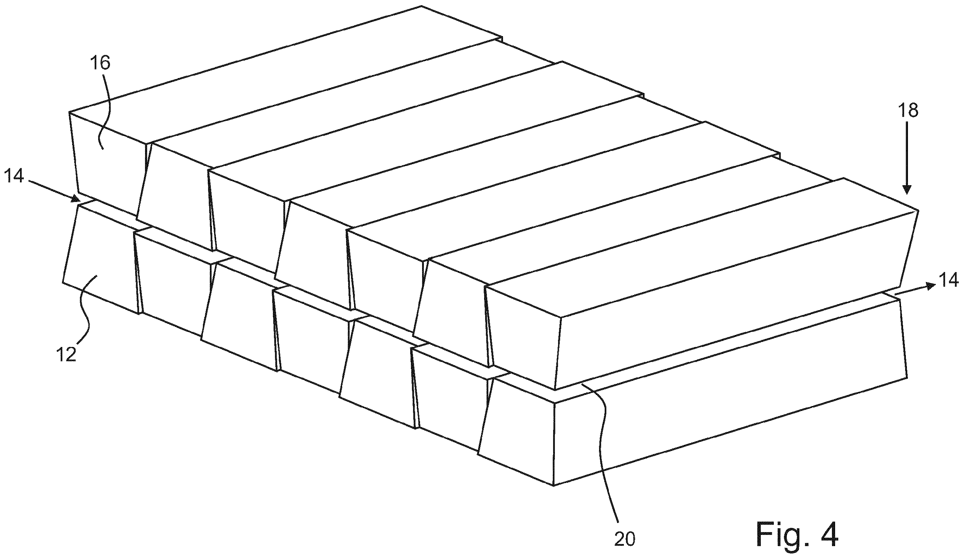

Figur 4 zeigt nun die Anordnung zweier Elektroden 12 und 16, wobei die in der Bilddarstellung obere Elektrode 16 in Pfeilrichtung 18 bewegbar ist, so dass der Reaktionsraum 20 zwischen den Elektroden stets gleich groß verbleibt, um so möglichst konstante Strömungsraten sowie Umsetzungsraten bereitzustellen. Dabei werden die Elektroden 12 und 16 hinsichtlich ihrer Polarität abwechselnd geschaltet, wobei die Polarität in Intervallen eingeschaltet wird, um Ablagerungen auf den Elektroden 12, 16 zu reduzieren. Beide Elektroden 12, 16 dienen als Opferanoden bei entsprechender Schaltung, wobei sich auf der Kathode in der Regel Ablagerungen befinden, die durch das Umschalten abgelöst werden und aus dem Flüssigkeitsstrom abgetrennt werden können. Die Fließrichtung ist hier wiederum mit dem Bezugszeichen 14 gekennzeichnet.

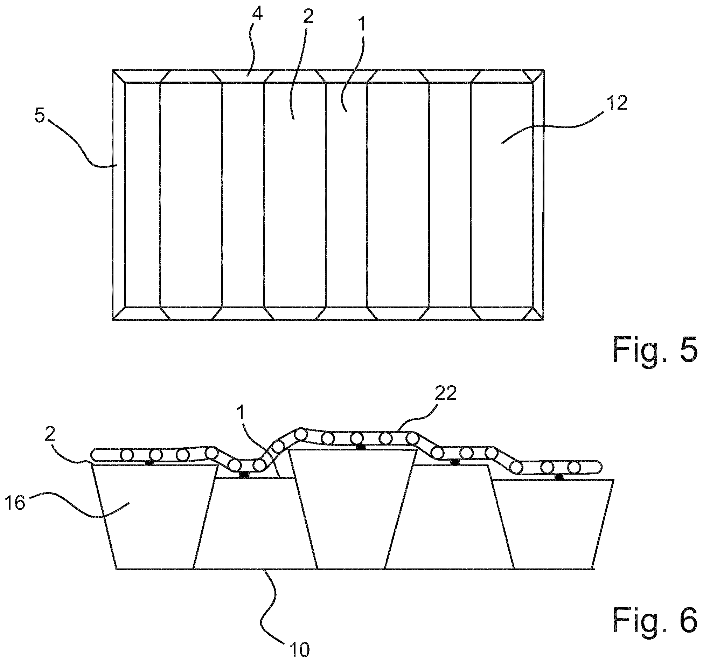

Figur 5 zeigt nun eine Draufsicht auf die untere Elektrode 12, wobei hier die Oberflächen 1 und 2, aber auch die schrägen Seitenflächen 4 sowie 5 erkannt werden können. Dabei sollen die abgeschrägten Seitenbereiche nicht mehr als 2 % der ebenen Elektrodenfläche betragen.

Figur 6 zeigt die obere Elektrode 16 in einem Ausschnitt, wobei zu erkennen ist, dass aufgrund von Gussunterschieden die Oberflächen 1 und 2 auf der der Oberfläche 10 gegenüberliegenden Seite auf verschiedenen Höhen liegen können, wenn die Oberfläche 10 eben ausgebildet ist, so dass eine Kontaktierung über eine Platte nur schwierig möglich ist. Die Kontaktierung zur Umschaltung der Polarität bezüglich der oberen Elektrode 16 erfolgt daher erfindungsgemäß bevorzugt über ein flexibles Kontaktband 22, beispielsweise in Form einer Gliederkette, so dass jeder einzelne der Barren mit dem Kontaktband 22 in Kontakt tritt.

Auf diese Weise kann eine sichere Kontaktierung sämtlicher Barren erreicht werden.

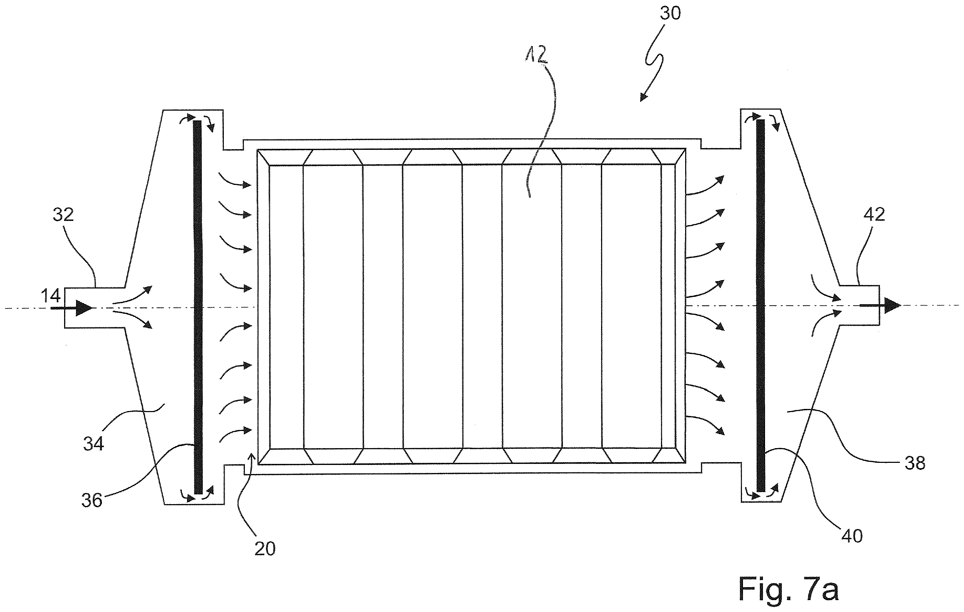

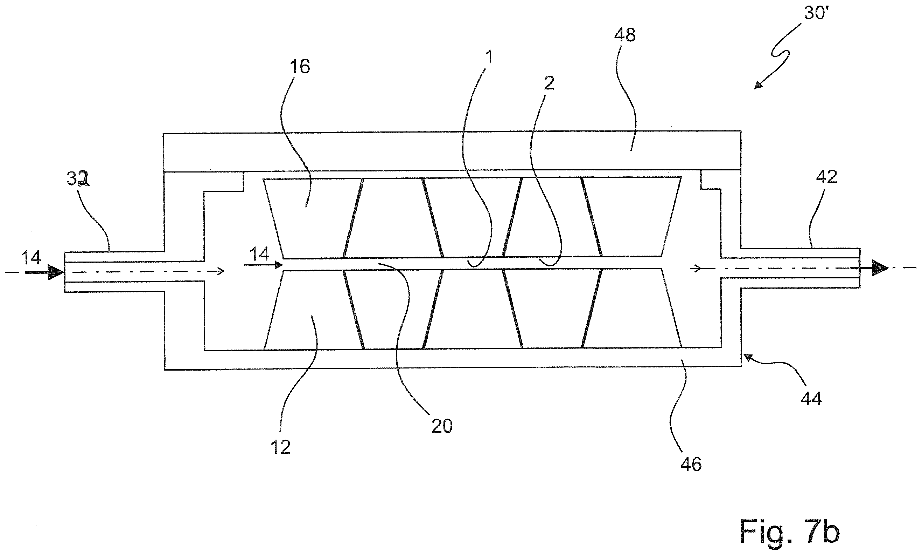

Figur 7 zeigt in den Darstellungen a) und b) erfindungsgemäße Reaktoren 30, wobei Figur 7a einen Schnitt durch einen Reaktionsraum 20 zeigt mit einer Sicht auf die Elektrode 12 gemäß Figur 5. Die Flüssigkeit strömt hierbei über den Zulauf 32 in eine Vorkammer 34 und um eine Schottwand 36 herum, die so vorgesehen ist, dass alle Strömung um die Schottwand 36 herumgeführt wird und zur Vergleichmäßigung der Strömung dient. Die Flüssigkeit gelangt dann in den Reaktionsraum 20 zwischen die Elektroden 12 und 16. In dem Reaktionsraum 20 sind die Elektroden 12 und 16 in Form von abwechselnd gelegten Barren vorgesehen. Die Flüssigkeit wird nach erfolgter Durchströmung des Reaktionsraums 20 über eine Nachkammer 38 und dort wiederum um eine Schottwand 40 herum durch einen Ablauf 42 geführt.

Figur 7b zeigt nun einen Reaktor 30' in einer anderen Schnittebene, wobei hier keine Vor- bzw. Nachkammer vorgesehen sind. Die aus den Barren aufgebauten Elektroden 12 und 16 sind in eine Gehäuse 44 aufgenommen, umfassend ein Oberteil 48 und ein Unterteil 46.

## Patentansprüche

1. Elektrolytischer Reaktor, insbesondere zum Abtrennen von Phosphat aus phosphathaltigen Flüssigkeiten und Rückgewinnung von Phosphatsalzen, umfassend ein Gehäuse, einen Zulauf, sowie eine Ablauf für die Flüssigkeit und zwei Elektroden (12, 16) unterschiedlicher Polarität, die zwischen sich einen Reaktionsraum (20) einschließen, wobei wenigstens eine der beiden Elektroden (12, 16) eine Opferelektrode ist und aus einem magnesiumhaltigen Werkstoff besteht, **dadurch gekennzeichnet, dass** die Opferelektrode aus trapezoiden Barren aufgebaut ist, die eine erste und eine zweite Oberfläche (1, 2) aufweisen, wobei die erste Oberfläche (1) kleiner ist als die zweite Oberfläche (2) und vier Seitenflächen (4, 5), die die erste (1) mit der zweiten Oberfläche (2) verbinden, **dadurch gekennzeichnet, dass** die Barren zur Bildung einer durchgehenden Oberfläche (10) abwechselnd mit der ersten (1) und mit der zweiten Oberfläche (2) zum Reaktionsraum (20) hin angeordnet sind und einander in der Form ergänzen.

2. Reaktor nach Anspruch 1, **dadurch gekennzeichnet, dass** die Barren eine Längsrichtung aufweisen und bezüglich ihrer Längsrichtung quer zur Strömungsrichtung (14) des Reaktors angeordnet sind.

3. Reaktor nach einem der vorangehenden Ansprüche, **dadurch gekennzeichnet, dass** der Reaktionsraum (20) einen rechteckigen Querschnitt in Strömungsrichtung (14) besitzt und über den gesamten Reaktionsraum (20) einen konstanten Strömungsquerschnitt aufweist.

4. Reaktor nach einem der vorangehenden Ansprüche, **dadurch gekennzeichnet, dass** eine Elektrode (16) relativ zur anderen Elektrode (12) bewegbar ist, so dass der Abstand der beiden Elektroden (12, 16) auch über den Verzehr der wenigstens einen Opferelektrode konstant ist.

5. Reaktor nach einem der vorangehenden Ansprüche, **dadurch gekennzeichnet, dass** die Elektroden (12, 16) eine im Wesentlichen rechteckige Oberfläche (10) ausbilden, die zum Reaktionsraum (20) hin gerichtet ist.

6. Reaktor nach einem der vorangehenden Ansprüche, **dadurch gekennzeichnet, dass** die Elektroden (12, 16) abwechselnd als Anode und als Kathode schaltbar sind.

7. Reaktor nach einem der vorangehenden Ansprüche, **dadurch gekennzeichnet, dass** die Kontaktierung der insbesondere bevorzugt bewegbaren Elektrode (16) über eine flexibles Kontaktband (22) oder eine flexible Kontaktkette erfolgt, die mit jedem der Barren in Kontakt ist.

## Claims

1. Electrolytic reactor, in particular for separating phosphate from phosphate-containing liquids and recovering phosphate salts, comprising a housing, an inlet and an outlet for the liquid, and two electrodes (12, 16) of different polarity which enclose a reactor chamber (20) between them, whereby at least one of the two electrodes (12, 16) is a sacrificial electrode and consists of a magnesia containing material, **characterized in that** the sacrificial electrode is constructed of trapezoid bars which have a first and second upper surface (1, 2), whereby the first upper surface (1) is smaller than the second upper surface (2), and four lateral surfaces, which connect the first (1) and the second (2) upper surface, **characterized in that** the bars for building a continuous surface (10) are alternately arranged with the first (1) and second (2) upper surface facing the reaction chamber (20) and complement each other in form which connect the first (1) with the second (2) upper surface.

2. Reactor according to Claim 1, **characterized in that** the bars have a longitudinal direction and in terms of their longitudinal direction are arranged transverse to the flow direction of the reactor.

3. Reactor according to one of the preceding claims, **characterized in that** the reaction chamber (20) has a rectangular cross-section in flow direction (14) and a constant flow cross-section throughout the entire reaction chamber (20).

4. Reactor according to one of the preceding claims, **characterized in that** one electrode (16) is movable relative to the other electrode (12) such that the spacing between the two electrodes (12, 16) is constant, also when the at least one sacrificial electrode is consumed.

5. Reactor according to one of the preceding claims, **characterized in that** the electrodes (12, 16) form an essentially rectangular surface (10) facing the reactor chamber (20).

6. Reactor according to one of the preceding claims, **characterized in that** the electrodes (12, 16) can be alternated to act as anode and as cathode.

7. Reactor according to one of the preceding claims, **characterized in that** the particularly preferred movable electrode (16) is contacted via a flexible contact strip (22) or a flexible contact chain that is in contact with every one of the bars.

## Revendications

1. Réacteur électrolytique, en particulier destiné à la séparation du phosphate à partir de liquides contenant du phosphate et à la récupération de sels de phosphate, comprenant un boîtier, une arrivée ainsi qu'une sortie pour le liquide, et deux électrodes (12, 16) de polarité différente qui enferment entre elles un espace réactionnel (20), dans lequel au moins l'une des deux électrodes (12, 16) est une électrode sacrificielle et est constituée d'un matériau contenant du magnésium, **caractérisé en ce que** l'électrode sacrificielle est réalisée à partir de lingots trapézoïdaux présentant des première et seconde surfaces (1, 2), dans lequel la première surface (1) est plus petite que la seconde surface (2), et quatre surfaces latérales (4, 5) reliant la première surface (1) à la seconde surface (2), **caractérisé en ce que** la première surface (1) et la seconde surface (2) des lingots sont agencées orientées vers l'espace réactionnel (20) de manière alternée afin de former une surface continue (10) et se complètent mutuellement pour donner la forme.

2. Réacteur selon la revendication 1, **caractérisé en ce que** les lingots présentent un sens longitudinal et sont agencés avec leur sens longitudinal transversal par rapport au sens d'écoulement (14) du réacteur.

3. Réacteur selon l'une quelconque des revendications précédentes, **caractérisé en ce que** l'espace réactionnel (20) présente une section transversale rectangulaire dans le sens d'écoulement (14) ainsi qu'une section transversale d'écoulement constante sur tout l'espace réactionnel (20).

4. Réacteur selon l'une quelconque des revendications précédentes, **caractérisé en ce qu'**une électrode (16) est mobile par rapport à l'autre électrode (12), de sorte que l'espacement entre les deux électrodes (12, 16) est également constant tout au long de la consommation de la au moins une électrode sacrificielle.

5. Réacteur selon l'une quelconque des revendications précédentes, **caractérisé en ce que** les électrodes (12, 16) forment une surface essentiellement rectangulaire (10) orientée vers l'espace réactionnel (20).

6. Réacteur selon l'une quelconque des revendications précédentes, **caractérisé en ce que** les électrodes (12, 16) peuvent être commutées de manière alternée en tant qu'anode et en tant que cathode.

7. Réacteur selon l'une quelconque des revendications précédentes, **caractérisé en ce que** la connexion de l'électrode (16), de manière particulièrement préférée mobile, se fait par l'intermédiaire d'une bande de contact flexible (22), ou d'une chaînette de contact flexible, en contact avec chacun des lingots.
